# EUROPEAN PATENT SPECIFICATION

(11) **EP 1 872 647 B1**
(45) Date of publication and mention of the grant of the patent: **26.08.2009**
(21) Application number: 07111272.6
(22) Date of filing: 28.06.2007
(51) Int. Cl.: A01F 12/44

(54) **Chevron inlet for cross flow fan**
Chevron-Einlass für einen Querstromlüfter
Entrée chevron pour ventilateur à courants croisés

(30) Priority: 29.06.2006 US 477753
(43) Date of publication of application: 02.01.2008
(73) Proprietor: CNH Belgium N.V., 8210 Zedelgem (BE)
(72) Inventor: Ricketts, Jonathan E., Ephrata, PA 17522 (US)
(74) Representative: CNH IP Department

(56) References cited:
- EP-A- 0 683 970
- DE-A1- 1 913 815
- FR-A- 1 441 981
- US-A- 4 906 219
- US-A- 5 599 162

## Description

The present invention relates generally to agricultural harvesters and, more particularly, to agricultural combine harvesters with a transverse fan assembly having an inlet opening structure to substantially improve output air flow across the entire length thereof and reduce noise.

Transverse fan assemblies used in agricultural combines are well known in the art. A typical agricultural combine includes a crop header apparatus which reaps planted grain stalks and then feeds the grain stalks to a threshing apparatus arranged within a body of the combine. The threshing apparatus functions to separate grain from material other than grain. As part of the threshing process, the grain is separated to fall or exit through openings in the threshing apparatus into the cleaning apparatus while material other than grain is discharged from the combine. Transverse fan assemblies provide air flow through sieves in the cleaning apparatus to separate grain from the smaller non-grain crop material sometimes called "chaff." Grain is collected within the combine while the chaff is discharged from the combine, partially aided by air flow from the fan assembly of the cleaning apparatus.

With the increased productivity demands on modern agricultural combines, cleaning capacity has become a limiting factor to overall harvesting performance of the combine. The most readily achieved method of increasing combine efficiency is by increasing the size of the cleaning area and the sieves to spread the crop materials across a wider area and in a thinner crop mat or veil which necessitates increased air flow through the cleaning area. Conventional methods for increasing air flow provided by a transverse fan of a given width require increasing the fan tip speed, whether by increasing the fan rotational speed, increasing fan diameter, or a combination of both. Unfortunately, these methods result in increased noise from the operating fan which increases overall noise level of the combine. Moreover, space limitations often preclude increasing fan diameter as a means to increase air flow.

One method for reducing fan noise is to provide a fan having angled blades. Transverse fans having straight blades generate considerable noise as each blade passes a straight plenum cut-off edge as the blade and the edge will be instantaneously adjacent for the entire length of the fan. Transverse fans having angled blades, such as that disclosed in US-A-5,599,162, reduce noise by reducing the portion of the fan blade that passes a straight cut-off edge at any instant in time. There are limitations in the angle to which a transverse fan blade may be positioned beyond which air flow in the axial direction becomes problematic and affects air flow distribution uniformity from the fan outlet.

It would be a great advantage to provide an improved cross flow fan capable of providing increased air flow to meet the needs of higher capacity combines without increasing the operating noise level of the fan thereby overcoming the above problems and disadvantages.

According to the invention, there is provided a cleaning system for an agricultural harvester, including at least one sieve and a transverse fan assembly that comprises:
a plenum defining an inlet opening and an outlet opening;
a transverse fan disposed within said plenum and being rotatable about an axis of rotation in a normal direction for drawing air in through said inlet opening and discharging air outwardly through said outlet opening towards said at least one sieve,
characterised in that said inlet opening has a cut-off edge including a first cut-off edge and a second cut-off edge, wherein said first and second cut-off edges are inclined with respect to said axis of rotation.

This arrangement provides a substantially even flow of air from the outlet of the air plenum along the length of the fan.

The fan may have elongated blades that are oriented substantially parallel to the axis of the fan. Preferably, the fan has blade blades that slant toward a peripheral centre portion of the fan such that opposite end portions of each elongated fan blade are arranged in substantial axial alignment relative to each other, while the centre portion of the respective blade is circumferentially offset relative to the end portions to provide each fan blade with a chevron-like configuration and appearance between opposite ends of the fan to facilitate a substantially constant output flow of air from the length of the fan assembly.

Advantageously, the transverse fan assembly plenum may have an inverted V-shaped inlet opening edge structure whereby the edge angles are oppositely oriented to the chevron angles of the adjacent fan blades to improve the output flow of air from the length of the fan assembly. The angle formed by the inlet edge and the chevron-like blades may be bisected by a line parallel to the fan axis of rotation.

The transverse fan assembly may have an inverted V-shaped inlet opening edge structure oppositely oriented from the chevron-like configuration of the fan blades to further reduce noise caused by the interaction of the fan blades and the inlet opening edge.

An embodiment of the present invention will now be described in further detail, by way of example only, with reference to the accompanying drawings, in which:
Figure 1 a perspective view, partially broken away, of a combine harvester in which the present invention is useful;
Figure 2 is a cross-sectional view showing a threshing apparatus and cleaning system of the combine harvester;
Figure 3 is an enlarged cross-sectional view of the cleaning system of the combine harvester;
Figure 4 is a perspective view of a fan rotor assembly according to the present invention;
Figure 5 is a cross-sectional view taken along line 5-5 of Figure 3 showing the preferred embodiment of the present invention; and
Figure 6 is an enlarged side elevation view of the fan taken along line 6-6 of Figure 5.

The terms "grain," "straw," "chaff" and "tailings" are used principally throughout this specification for convenience and it is to be understood that these terms are not intended to be limiting. Thus "grain" refers to that part of the crop material which is threshed and separated from the discardable part of the crop material, which is referred to as "straw." Incompletely threshed crop material is referred to as "tailings." The smallest pieces of tailings are referred to as "chaff." Also, any reference herein to the terms "left" or "right," "forward" or "rearward," or "top" or "bottom" are used as a matter of mere convenience, and are determined by standing at the rear of the machine facing in its normal direction of travel; use of these terms should not be construed as limiting. Furthermore, the various components shown or described herein for any specific application of this invention can be varied or altered as anticipated by this invention and the practice of a specific application of any element may already be widely known or used in the art by persons skilled in the art and each will likewise not therefore be discussed in significant detail.

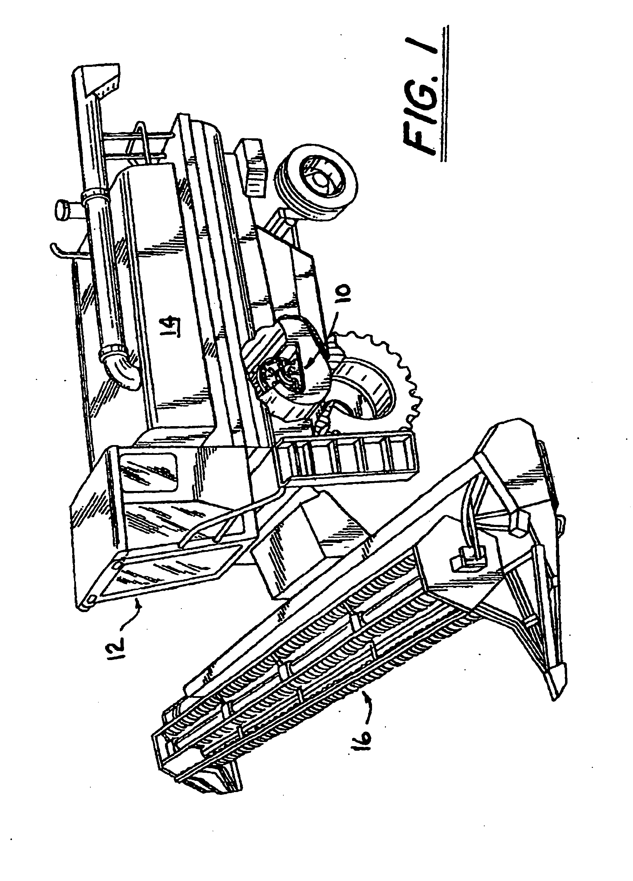

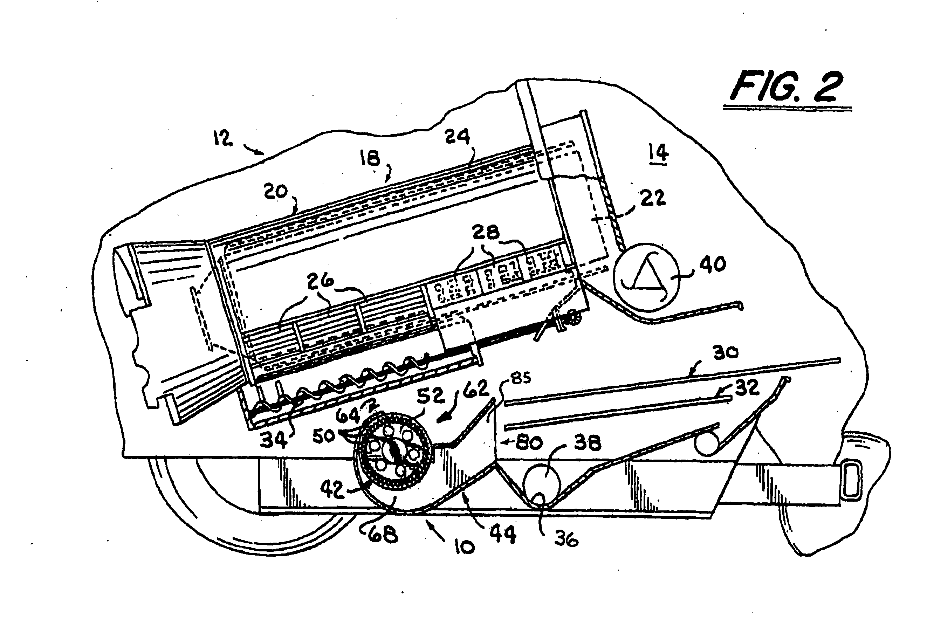

Referring now to the drawings, wherein like reference numerals indicate like parts throughout the several views. Figures 1 and 2 illustrate a fan assembly 10 according to the present invention arranged in operable combination with a self-propelled agricultural combine harvester 12 of the axial-flow type, wherein crop material is threshed and separated while it is advanced by and along a longitudinally arranged rotor. It should be appreciated, however, that the principles and teachings of the present invention equally apply to fan assemblies that are used in conventional and dual rotor threshing systems used in other agricultural combines or in other applications.

The self-propelled combine harvester is operatively powered by an engine (not shown) suitably housed within a body 14 of the combine harvester to provide driving power. The transfer of rotation and power from the engine to various driven components of the combine is of a conventional nature and could include fixed or variable belt or chain drives which are not shown for purposes of clarity.

At its front end, combine harvester 12 is provided with a conventional crop harvesting header 16. The choice of header, of course, does not limit or relate to the present invention. The crop harvesting header 16 cuts and directs crop material into a longitudinally arranged threshing apparatus 18 (Figure 2). As is well known in the art, the threshing apparatus includes a rotor assembly 20, including a relatively large diameter rotor 22 that is mounted within a threshing cage 24. Disposed about the cage 24 is a simple system of concaves 26 and separating grates 28 which, through the action of the rotor 22 and centrifugal force, act to separate grain from the straw and deliver such material to a pair of vertically spaced apart cleaning sieves 30 and 32. In the embodiment shown, auger 34 moves grain to the cleaning sieves 30 and 32 defining part of the cleaning area on the combine. One such example is described in US-A-5,599,162, herein incorporated in its entirety by reference.

The sieves 30 and 32 are mounted for oscillation to separate the grain from the tailings. The oscillation of the sieves 30 and 32 arranges the tailings received from the threshing apparatus 18 in a relatively large crop mat or veil extending across substantially the entire sieve. The heavier grain falls through the sieves 30 and 32 to a clean grain collector 36. An auger 38 directs the grain from the collector 36 into a hopper or grain bin (not shown) often housed generally directly behind the cab within combine harvester body 14. Material which is too large to pass through the concaves 26 and grates 28 (straw) is propelled rearwardly through the rotor assembly 20. A conventional beater 40 acts upon the chaff discharged from the rotor assembly 20. Beater 40 propels straw from the rear of the rotor assembly 20 and throws it back for broad discharge from the rear end of the combine.

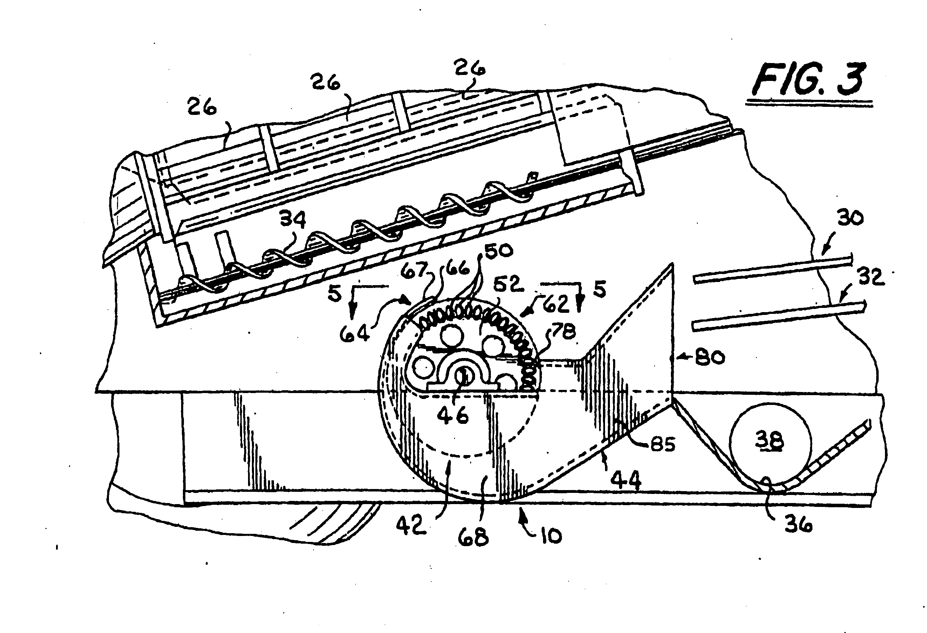

Referring now to Figure 3, fan assembly 10, constructed in accordance with the present invention, is arranged in combination with the cleaning sieves 30, 32. The fan assembly 10 comprises an elongated transverse or cross flow fan 42 and an air plenum 44. Fan 42 extends transversely across substantially the entire width of the sieves 30, 32. More specifically, fan 42 is transversely mounted on the combine harvester 12 beneath the threshing apparatus 18 and preferably forward of the cleaning sieves 30, 32.

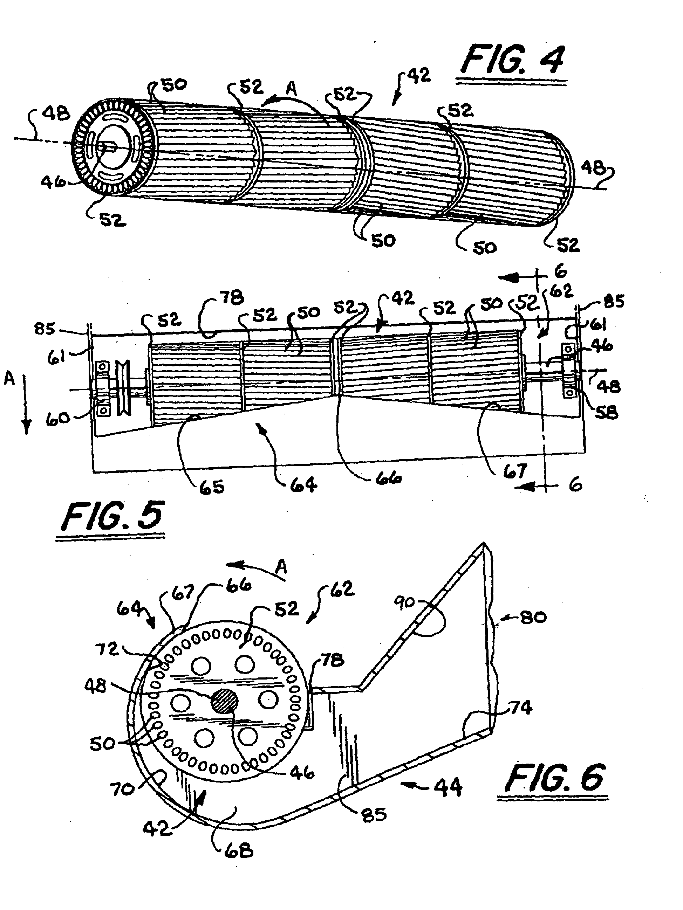

As shown in Figures 3 and 4, fan 42 includes a central and preferably elongated axle 46 defining an elongated axis of a rotation 48 for the fan assembly 10, a plurality of closely spaced fan blades 50 extending axially in a circumferential array or pattern about the axis of rotation 48 to define an open centre for the fan 42, and a plurality of axially spaced and aligned fan blade mounting disks 52. The mounting disks 52 are of substantially uniform diameter. Each fan blade mounting disk 52 is connected to and extends radially outward from the axle 46 for driving the fan blades 50, thereby establishing an air flow through the air plenum 44. Air enters the plenum through air inlet 62 and is discharged through air outlet 80. While mounting disk 52 is shown as having a generally round geometric configuration, it could take any suitable shape, such as, for example, spoke-shaped, star-shaped, and the like.

The fan blades 50 have a generally curved cross-sectional configuration and are arranged in closely spaced relation relative to each other. Each fan blade 50 preferably has a forwardly curved cross sectional configuration. A pair of fan blade mounting disks 52 are arranged toward opposite ends of the fan 42. Since the length of the transverse fan 42 is functionally unlimited, other disks 52 may be provided along the length of the fan 42 to counteract centrifugal forces acting on the blades 50 during operation of the fan assembly 10. In a most preferred form the invention, each fan blade 50 is formed from a material such as sheet metal and is connected to the fan blade mounting disks 52. One or more disks 52 may be arranged along the length of the fan 42.

Referring now to Figures 4 and 5, opposite ends of the fan blades 50 are arranged in general axial alignment relative to each other. The centre portion of each fan blade 50 is, however, offset in circumferential relation relative to the opposite end thereof such that the fan blade 50 slants or tapers toward a peripheral centre portion of the fan whereby each fan blade 50 has a chevron-like configuration between opposite ends thereof. The chevron "points" in the direction of fan rotation when the fan is operating, shown as arrow "A" in Figures 4 and 5. The resultant flow of air off the blades 50 is directed outwardly toward the fan ends in a manner improving fan performance by lessening end air effects and thereby providing a generally uniform air distribution across the width of fan 42. Slanting of the fan blades 52 furthermore has proven to reduce operating noise (sound) levels of the fan 42. Accordingly, higher fan speeds can be used to increase the output flow of air from the fan 42 without concern over increasing environmental noise pollution or noise levels can be reduced when the fan speed remains unchanged. The degree of slanting, or angle, of the fan blades 50 that may be used for noise reduction is not without limits. As the blade angle is increased from zero with respect to the axis of rotation 48, zero angle being an axially straight blade, air flow outwardly from air outlet 80 is initially increased, air flow uniformity is improved, and noise is reduced. As the fan blade angle is increased further, air flow in the axial direction of the fan increases, lessening the air flowing tangentially from the fan blades which tends to negatively affect air flow rate and uniformity, and to increase noise. Fans in which fan blades 50 are arranged in a cylindrical pattern wherein the blades are in substantially parallel axial alignment with the axis of rotation 48, that is there is no angling of the fan blades 50, are also contemplated by the invention.

As shown in Figure 5, fan 42 is supported at opposite ends by axle 46 which is rotatably mounted in bearing blocks 58 and 60 secured at opposite open ends of the air plenum 44. The air plenum 44 extends parallel to and along substantially the entire length of the fan 42. The air plenum 44 is preferably fabricated from an air impervious material such as steel or the like and defines an elongated air inlet opening 62 and an elongated air outlet opening 80 for directing air discharged therefrom toward the cleaning sieves 30 and 32. The air plenum 44 further defines an internal chamber 68, wherein the fan 42 is rotatably mounted to drive air between the air inlet and air outlet opening 62 and 80 respectively.

Referring to Figures 5 and 6, the chamber 68 defined by the air plenum 44 has a cross-sectional scroll-like configuration and includes an upper chamber wall 90, a lower chamber wall 70, and opposing side walls 85 interconnecting the two to form chamber 68. Upper chamber wall 90 spans the width of air plenum 44, bounded forwardly by baffle edge 78 and extending rearwardly therefrom defining the upper portion of chamber 68 to its readwardmost edge proximal air outlet opening 80. Lower chamber wall 70 similarly spans the width of air plenum 44 forming a continuous inner chamber wall from cut-off edge 64 positioned proximate the fan periphery to the rearwardmost edge proximal air outlet opening 80 and below the rearward edge of upper chamber wall 90. Lower chamber wall 70 includes an upstream curvilinear face 72 and a downstream curvilinear face 74. At the inlet opening 62, the upstream curvilinear face 72 is disposed closely adjacent the periphery of fan 42, including the projection of first and second cut-off edges 65, 67 into the inlet opening 62. Chamber wall 70 increases in distance from the periphery of fan 42 as it leads to the downstream face 74. The downstream face 74 of the chamber wall 70 extends rearwardly and upwardly toward the sieves 30, 32 to its rearwardmost edge at air outlet opening 80 for directing cleaning air exhausted from the fan 42. This configuration of the air plenum chamber 68 is such that the air flow generated by the rotation of the fan 42 pushes upon itself in the area wherein the chamber wall 70 is arranged proximate to the periphery of the fan, thus adding pressure to the air flow generated by the fan 42 and directed upwardly toward the sieves 30, 32. Advantageously, the air plenum 44 wraps about and extends across the front of the fan 42 to protect the fan blades 50 from being damaged by rocks and other debris that are present in the field as the combine moves thereover.

The air inlet opening 62 defined by the air plenum 44 extends across a top side of the fan 42 and opens to both forward and rearward portions of the fan 42, bounded forwardly by cut-off edge 64 and rearwardly by baffle edge 78. Air inlet opening 62 is further defined by opposing plenum side edges 61, baffle edge 78, and cut-off edge 64. Side edges 61 and baffle edge 78 are substantially straight with the side edges oriented substantially perpendicular to axis of rotation 48 and the baffle edge substantially parallel to the axis of rotation 48. The cut-off edge 64 includes first and second cut-off edges 65, 67, intersecting at and separated by an apex 66. Apex 66 is centrally positioned alongside the length of fan 42. The cut-off edges 65, 67 are angled with respect to axis of rotation 48, being substantially symmetrically angled about apex 66 and substantially spanning the width of the air inlet opening 62 to form an inverted V-like structure that extends into inlet opening 62, continuing in the direction of upstream curvilinear face 72. The angles of the first and second cut-off edges 65, 67 are similar, but reversed from the angles of the adjacent fan blades 50. Apex 66 of the V-like structure formed by first and second cut-off edges 65, 67 points in the opposite direction as the chevron pattern of the fan blades 50 and is substantially aligned with the longitudinal centre of fan 42. As a result, the angles formed between cut-off edges 65, 67 and the adjacent fan blades 50 are generally bisected by a line parallel to axis of rotation 48. The effect is a doubling of the intersecting angle formed between a fan blade 50 and the cut-off edge 65 or 67 as the fan rotates. By providing an angled cut-off edge, the intersecting angle between the fan blades 50 and the plenum cut-off edge 64 can be increased beyond the known limitations of angled fan blades in cross-flow fans. These further increases in intersecting angle between fan blades and the plenum cut-off edge reduce the portion of the blade/cut-off edge interacting at a discreet point in time compared to a substantially straight cut-off edge interacting with an angled fan blade without the limitations and, consequently, the noise caused by the interaction.

It will be understood that changes in the details, materials, steps and arrangements of parts which have been described and illustrated to explain the invention will occur to and may be made by those skilled in the art upon a reading of this disclosure within the principles and scope of the invention as defined by the claims. The foregoing description illustrates the preferred embodiment of the invention; however, concepts, as based upon the description, may be employed in other embodiments without departing from this scope of the invention.

## Claims

1. A cleaning system for an agricultural harvester, including at least one sieve (30/32) and a transverse fan assembly (10) that comprises:
a plenum (44) defining an inlet opening (62) and an outlet opening (80);
a transverse fan (42) disposed within said plenum (44) and being rotatable about an axis of rotation (48) in a normal direction for drawing air in through said inlet opening (62) and discharging air outwardly through said outlet opening (80) towards said at least one sieve (30/32),
**characterised in that** said inlet opening (62) has a cut-off edge (64) including a first cut-off edge (65) and a second cut-off edge (67), wherein said first and second cut-off edges are inclined with respect to said axis of rotation (48).

2. A cleaning system according to claim 1, **characterised in that** said first and second cut-off edges (65, 67) form a V-shape.

3. A cleaning system according to claim 2, **characterised in that** said V-shape is inverted with respect to the normal direction of rotation of said fan (42).

4. A cleaning system according to claim 2 or 3, **characterised in that** said first and second cut-off edges (65, 67) meet at an apex (66), wherein said apex points in a direction opposite said normal direction of the rotation of said fan (42).

5. A cleaning assembly according to claim 4, **characterised in that** said fan (42) has a length along said axis of rotation (48) and said apex (66) is substantially centred along said length.

6. A cleaning system according to any of the preceding claims, **characterised in that** said fan (42) has blades (50) oriented substantially parallel to said axis of rotation (48).

7. A cleaning system according to any of the claims 1 to 5, **characterised in that** said fan (42) has blades (50) that are inclined with respect to said axis of rotation (48).

8. A cleaning system according to claim 7, **characterised in that** said blades (50) are oriented in a chevron-like configuration.

9. A cleaning system according to claim 7 or 8, **characterised in that** an angle formed between said first cut-off edge (65) and an adjacent one of said blades (50) is substantially bisected by a line parallel to said axis of rotation (48).

10. A cleaning system according to any of the preceding claims,
**characterised in that:**
said fan (42) has blades (50) arranged in a substantially axially cylindrical pattern about said axis of rotation (48), that, in rotation, generate a periphery;
said plenum (44) has an inner chamber wall (70) having an upstream curvilinear portion (72) adjacent to said inlet opening (62) and a downstream curvilinear portion (74), said inner chamber wall increasing in distance from said periphery as it leads to said downstream curvilinear portion; and
said cut-off edge (64) is a proximal edge of said upstream curvilinear portion (74).

11. A cleaning system according to claim 10, **characterised in that** said cut-off edge (64) is adjacent said periphery of said fan (42).

12. A cleaning system according to claim 10 or 11, **characterised in that** said plenum has a further chamber wall (90) opposite said inner chamber wall (70) and having a baffle edge (78) adjacent to said inlet opening (62).

## Patentansprüche

1. Reinigungssystem für eine landwirtschaftliche Erntemaschine, die zumindest ein Sieb (30/32) und eine sich in Querrichtung erstreckende Gebläseanordnung (10) einschließt, die Folgendes umfasst:
ein Plenum (44), das eine Einlassöffnung (62) und eine Auslassöffnung (80) bildet;
ein Quergebläse (42), das in dem Plenum (44) angeordnet ist und um eine Drehachsel (48) in einer normalen Richtung zum Ansaugen von Luft durch die Einlassöffnung (62) und zum Ausstoßen von Luft nach außen hin durch die Auslassöffnung (80) in Richtung auf das zumindest eine Sieb (30/32) drehbar ist,
**dadurch gekennzeichnet, dass** die Einlassöffnung (62) eine Abreißkante (64) aufweist, die eine erste Abreißkante (65) und eine zweite Abreißkante (67) einschließt, wobei die ersten und zweiten Abreißkanten gegenüber der Drehachse (48) geneigt sind.

2. Reinigungssystem nach Anspruch 1, **dadurch gekennzeichnet, dass** die ersten und zweiten Abreißkanten (65, 67) eine V-Form bilden.

3. Reinigungssystem nach Anspruch 2, **dadurch gekennzeichnet, dass** die V-Form bezüglich der normalen Drehrichtung des Gebläses (42) umgekehrt ist.

4. Reinigungssystem nach Anspruch 2 oder 3, **dadurch gekennzeichnet, dass** sich die ersten und zweiten Abreißkanten (65, 67) an einem Scheitelpunkt (66) treffen, wobei der Scheitelpunkt in eine Richtung entgegengesetzt zur normalen Drehrichtung des Gebläses (42) zeigt.

5. Reinigungsbaugruppe nach Anspruch 4, **dadurch gekennzeichnet, dass** das Gebläse (42) eine Länge entlang der Drehachse (48) aufweist, und das der Scheitelpunkt (66) im Wesentlichen entlang der Länge zentriert ist.

6. Reinigungssystem nach einem der vorhergehenden Ansprüche, **dadurch gekennzeichnet, dass** das Gebläse (42) Schaufeln (50) aufweist, die im Wesentlichen parallel zur Drehachse (48) ausgerichtet sind.

7. Reinigungssystem nach einem der Ansprüche 1 bis 5, **dadurch gekennzeichnet, dass** das Gebläse (42) Schaufeln (50) ausweist, die gegenüber der Drehachse (48) geneigt sind.

8. Reinigungssystem nach Anspruch 7, **dadurch gekennzeichnet, dass** die Schaufeln (50) in einer Chevron-artigen Konfiguration ausgerichtet sind.

9. Reinigungssystem nach Anspruch 7 oder 8, **dadurch gekennzeichnet, dass** ein Winkel, der zwischen der ersten Abreißkante (65) und einer benachbarten der Schaufeln (50) im Wesentlichen durch eine Linie mittelhalbiert wird, die parallel zu der Drehachse (48) ist.

10. Reinigungssystem nach einem der vorhergehenden Ansprüche, **dadurch gekennzeichnet, dass:**
das Gebläse (42) Schaufeln (50) aufweist, die in einem im Wesentlichen axialen zylindrischen Mustern um die Drehachse (48) angeordnet sind, die bei der Drehung einen Umfang erzeugen;
das Plenum (44) eine innere Kammerwand (70) mit einem stromaufwärts gelegenen kurvenförmigen Abschnitt (72) benachbart zu der Einlassöffnung (62) und einen stromabwärts gelegenen kurvenförmigen Abschnitt (74) aufweist, wobei die innere Kammerwand hinsichtlich ihres Abstandes von dem Umfang zunimmt, während sie zu dem stromabwärts gelegenen kurvenförmigen Abschnitt verläuft; und
die Abreißkante (64) eine proximale Kante des stromaufwärts gelegenen kurvenförmigen Teils (74) ist.

11. Reinigungssystem nach Anspruch (10), **dadurch gekennzeichnet, dass** die Abreißkante (64) benachbart zu dem Umfang des Gebläses (42) liegt.

12. Reinigungssystem nach Anspruch 10 oder 11, **dadurch gekennzeichnet, dass** das Plenum weiterhin eine Kammerwand (90) entgegengesetzt zu der inneren Kammerwand (70) und eine Staukante (78) benachbart zu der Einlassöffnung (62) aufweist.

## Revendications

1. Système de nettoyage pour une machine de récolte agricole, comprenant au moins un tamis (30/32) et un ensemble de ventilateur transversal (10) qui comprend :
un plénum de distribution d'air (44) définissant une ouverture d'entrée (62) et une ouverture de sortie (80),
un ventilateur transversal (42) disposé dans ledit plénum de distribution d'air (44) et étant rotatif autour d'un axe de rotation (48) dans un sens normal pour aspirer l'air dans et à travers la dite ouverture d'entrée (62) et refouler l'air à l'extérieur au travers de ladite ouverture de sortie (80) vers ledit au moins un tamis (30/32),
**caractérisé en ce que** ladite ouverture d'entrée (62) a un bord de coupure (64) comprenant un premier bord de coupure (65) et un second bord de coupure (67), dans laquelle les premier et second bords de coupure sont inclinés par rapport au dit axe de rotation (48).

2. Système de nettoyage selon la revendication 1**, caractérisé en ce que** les premier et second bords de coupure (65, 67) forment un V.

3. Système de nettoyage selon la revendication 2, **caractérisé en ce que** la forme du V est inversée par rapport au sens normal de rotation du dit ventilateur (42).

4. Système de nettoyage selon la revendication 2 ou 3, **caractérisé en ce que** les premier et second bords de coupure (65, 67) se rencontrent à un apex (66), dans lequel ledit apex pointe dans une direction opposée au sens normal de rotation du dit ventilateur (42).

5. Système de nettoyage selon la revendication 4, **caractérisé en ce que** ledit ventilateur (42) a une longueur le long du dit axe de rotation (48) et ledit apex (66) est sensiblement centré le long de ladite longueur.

6. Système de nettoyage selon l'une quelconque des revendications précédentes, **caractérisé en ce que** le ventilateur (42) a des pales (50) orientées sensiblement parallèlement au dit axe de rotation (48).

7. Système de nettoyage selon l'une quelconque des revendications 1 à 5, **caractérisé en ce que** le ventilateur (42) a des pales (50) qui sont inclinées par rapport au dit axe de rotation (48).

8. Système de nettoyage selon la revendication 7, **caractérisé en ce que** lesdites pales (50) sont orientées dans une configuration de type chevron.

9. Système de nettoyage selon la revendication 7 ou 8, **caractérisé en ce qu'**un angle formé entre ledit premier bord de coupure (65) et l'une adjacente des dites pales (50) est sensiblement divisé en deux par une ligne parallèle au dit axe de rotation (48).

10. Système de nettoyage selon l'une quelconque des revendications précédentes, **caractérisé en ce que:**
ledit ventilateur (42) a des pales (50) disposées dans une configuration sensiblement axialement cylindrique autour du dit axe de rotation (48), qui, en rotation, produisent une périphérie,
ledit plénum de distribution d'air (44) a une paroi de chambre intérieure (70) ayant une partie curviligne en amont (72) adjacente à ladite ouverture d'entrée (62) et une partie curviligne en aval (74), ladite paroi de chambre intérieure augmentant dans sa distance de ladite périphérie au fur et à mesure qu'elle aboutit à ladite partie curviligne en aval, et
ledit bord de coupure (64) est un bord proximal de ladite partie curviligne amont (74).

11. Système de nettoyage selon la revendication 10, **caractérisé en ce que** ledit bord de coupure (64) est adjacent à ladite périphérie du dit ventilateur (42).

12. Système de nettoyage selon la revendication 10 ou 11, **caractérisé en ce que** ledit plénum de distribution d'air comporte une autre paroi de chambre (90) opposée à la dite paroi de chambre intérieure (70) et ayant un bord de déflection (78) adjacent à ladite ouverture d'entrée (62).
